# EUROPÄISCHE PATENTSCHRIFT

(11) **EP 0 504 963 B1**
(45) Veröffentlichungstag und Bekanntmachung des Hinweises auf die Patenterteilung: **20.09.1995**
(21) Anmeldenummer: 92200603.6
(22) Anmeldetag: 02.03.1992
(51) Int. Cl.: B62D 1/04, B29C 51/08

(54) **Lenkrad**
Steering wheel
Volant de direction

(30) Priorität: 20.03.1991 DE 4108973
(43) Veröffentlichungstag der Anmeldung: 23.09.1992
(73) Patentinhaber: KOLBENSCHMIDT Aktiengesellschaft, D-74150 Neckarsulm (DE)
(72) Erfinder: Käufer, Helmut, Prof. Dr., W-4020 Mettmann 2 (DE); Grimm, Maximilian, W-2000 Hamburg 63 (DE); Kreuzer, Martin, W-8751 Kleinwallstadt (DE)
(74) Vertreter: Rieger, Harald, Dr.

(56) Entgegenhaltungen:
- EP-A- 0 022 679
- EP-A- 0 074 473
- EP-A- 0 309 316
- DE-A- 2 924 063
- FR-A- 1 478 354
- GB-A- 1 450 045
- GB-A- 2 061 848
- US-A- 4 800 775
- AUTOMOBILTECHNISCHE ZEITSCHRIFT Bd. 85, Nr. 10, Oktober 1983, STUTTGART (DE) Seite 608; M.BARTELS: 'Computer Aided Engineering in der Kunststoff-Teile-Entwicklung'

## Beschreibung

Die Erfindung betrifft ein Lenkrad, vorzugsweise für Lenkanlagen von Kraftfahrzeugen, mit einem aus thermoplastischem teilkristallinem Kunststoff, insbesondere Polypropylen, Polyethylen oder Polyamid, durch Spritzen hergestellten Lenkradskelett, das mit einer beim Aufschlag plastisch deformierbaren Kunststoffschicht, vorzugsweise aus Polyurethan-Integralschaum bestehend, umhüllt ist sowie ein Verfahren zur Herstellung des Lenkradskeletts.

Für den Lenkradskelettaufbau werden heute vorzugsweise Stahl für die Lenkradspeichen, Stahl für den Lenkradkranz und Aluminium-Druckguß für die Lenkradnabe verwendet, wobei die Verbindung zwischen Lenkradkranz und Lenkradspeichen geschweißt ist. Die Nachteile dieses Standard-Lenkradskeletts sind sein relativ hohes Gewicht und sein hohes Massenträgheitsmoment.

Infolge der Unwucht der Räder an der Hinterachse entstehen Horizontalschwingungen des Fahrzeugaufbaus und damit Vertikalschwingungen des Lenkrades. Zur Beseitigung des dadurch erzeugten Lenkradschüttelns ist eine möglichst kleine Lenkradmasse anzustreben.

Lenkradüberschwingungen treten häufig bei front- und allradgetriebenen Kraftfahrzeugen nach Kurvenfahrten auf, wenn man das Lenkrad selbständig zurückstellen läßt und gleichzeitig mit maximaler Antriebskraft beschleunigt wird. Die daraus entstehenden Fahrzeugschwingungen um die Roll- und Hochachse (Wanken und Gieren) des Kraftfahrzeugs kann durch ein kleines Trägheitsmoment, d.h. durch eine kleine Schwungmasse des Lenkrades im Sinne einer Fahrzeugstabilisierung beeinflußt werden. Eine Verringerung des Lenkradträgheitsmoments wirkt stark fahrzeugstabilisierend. Faßt man die lenkradspezifischen Forderungen zur Optimierung des Fahrkomforts und Fahrverhaltens eines Kraftfahrzeugs zusammen, so ergibt sich für das Lenkrad ein Konstruktionsprofil mit den Merkmalen:
- geringes Gewicht, wobei die Masse möglichst drehachsennah anzuordnen ist (Schütteln, Zittern) und
- Trägheitsmoment oder Schwungmasse als Kompromiß zwischen Lenkraddrehschwingungen und Lenkradüberschwingungen, wobei der Kompromiß fahrzeugspezifisch unterschiedlich zu suchen ist.

Aus der Berechnung des Schwungmoments folgt, daß bei vorgegebenen Abmessungen und damit Durchmesser des Lenkrades eine Beeinflussung des Trägheitsmomentes nur über die Absenkung der dem Lenkradradius zuordnenbaren Massen möglich ist.

Ein etwas geringeres Massenträgheitsmoment und Gewicht besitzt ein Lenkradskelett, dessen Nabe aus Aluminium-Druckguß, dessen Speichen aus Stahl, dessen Kranz aus Stahlrohr bestehen und bei dem die Verbindung zwischen Kranz und Speichen aus einer Aluminium-Druckgußmuffe, die zusammen mit dem Lenkradskelett in einem Guß gegossen wird, gebildet ist. Diese Lenkradskelettkonstruktion erfordert jedoch einen vergleichsweise höheren Herstellungsaufwand.

Eine weitere Senkung des Massenträgheitsmoments und des Gewichts wird mit einem Lenkrad erreicht, bei dem die Nabe aus Aluminium-Druckguß, die Speichen und der Kranz aus einer Aluminium-Knetlegierung gefertigt sind und die Verbindung zwischen Kranz und Speichen über Aluminium-Druckgußmuffen vorgenommen wird. Um die negative Auswirkung des Gießdrucks auf den Lenkradkranz zu kompensieren, muß dieser an den Umgußstellen mit Nippeln verstärkt sein. Die für die Herstellung eines solchen Lenkradskeletts notwendigen Fertigungstechniken verursachen einen relativ hohen Aufwand. In der EP-A-0 292 038 ist eine Lenkradskelettkonstruktion beschrieben, bei der Lenkradnabe, Lenkradspeichen und der Umguß der Lenkradspeichen am Lenkradkranz einteilig aus Aluminium-Druckguß gegossen sind und der Lenkradkranz je nach gewünschtem Trägheitsmoment aus Stahl oder Aluminium bzw. Aluminiumlegierung als Voll- oder Hohlprofil ausgeführt ist.

Ein minimiertes Massenträgheitsmoment und Gewicht weisen aus thermoplastischen Kunststoffen, vorzugsweise höhermolekularen Polyamiden, durch Spritzgießen hergestellte Lenkradskelette auf (DE-U-7 531 072), die jedoch bisher keinen Eingang in die Praxis gefunden haben, da sie den wichtigsten Festigkeitsanforderungen nicht genügen. So darf bei der Torsionsprüfung, bei der die Steifigkeit des Lenkrades durch eine 1 min dauernde Beaufschlagung mit einem Drehmoment von 250 Nm ermittelt wird, eine bleibende Verformung von 1 % nicht überschritten werden. Bei der statischen Biegeprüfung, die dem Festigkeitsnachweis bei Abstützkräften in Fahrtrichtung dient, darf eine in Geradeausfahrtrichtung angreifende Kraft das Lenkrad nicht mehr als 1,5 mm bleibend verformen, wenn der den größeren Umfangswinkel umfassende Teil des Lenkradkranzes mit einer in Lenkradachse wirkenden Kraft von F = 380 Newton belastet wird. Um die Materialermüdung zu prüfen, muß das Lenkradskelett an seiner schwächsten Stelle einer den Lenkradkranz angreifende Biegewechselkraft von F = ± 200 Newton über mehr als 100 000 Lastwechsel wiederstehen. Solchen Anforderungen genügt das Lenkradskelett des in der DE-A-3625372 offenbarten Lenkrads nach dem Oberbegriff des Anspruchs 1, dessen Kranz sowie die aus thermoplastischem, ggf. faserverstärktem Kunststoff bestehenden Lenkradnabe und Lenkradspeiche mit einer Schicht eines verformbaren Kunststoffs ummantelt sind, wobei der Lenkradkranz je nach gewünschtem Massenträgheitsmoment aus Stahl, Leichtmetall oder aus gewickelten, in Kunststoff eingebetteten Endlosglasfasern besteht. Bei gleichen Lenkradabmessungen ist je nach Fahrzeugtyp eine Variation des Trägheitsmomentes bei jeweils minimaler Lenkradmasse durch unterschiedliche Lenkradkranzausführungen bei gleicher Nabengeometrie und gewichtsoptimierter Speichengeometrie möglich. Da der Lenkradkranz unabhängig von der Lenkradnabe und den Lenkradspeichen gefertigt werden muß und dazu eine besondere Wickelanlage mit den Baugruppen Spulenwagen für die Glasfasern, Tränkstation für den Kunststoff und Wickelachse mit Wickelformen sowie Steuer- und Regeleinheiten erforderlich sind, ist bisher auf die Herstellung derartig aufgebauter Lenkradskelette verzichtet worden.

Aus der EP-A-0 309 316 ist ein Verfahren zur Herstellung eines aus Kunststoff bestehenden Lenkrads mit metallischer Lenkradnabe bekannt. Dabei werden in eine die Lenkradnabe enthaltende Preßform mit Fasern verstärkte, langgestreckte Kunststoffprofile eingelegt und durch Pressen in einem Arbeitsgang zum Lenkrad unter Einbindung der Lenkradnabe geformt.

Es ist die Aufgabe der vorliegenden Erfindung, ein aus thermoplastischem teilkristallinem Kunststoff spritzgegossenes, einstückiges Lenkradskelett für Lenkräder zu schaffen, das die statischen und dynamischen Festigkeitsanforderungen erfüllt, eine ausreichende Funktionssteifigkeit besitzt, auf vergleichsweise einfache Art und Weise herstellbar und vollständig recyclierbar ist.

Die Lösung dieser Aufgabe besteht darin, daß das Lenkradskelett wenigstens in Teilbereichen des Lenkradkranzes ein monoaxiales Gefüge besitzt, dessen Moleküle senkrecht zur Umfangsrichtung des Lenkradkranzes ausgerichtet sind. Mit Hilfe des Preßreckens lassen sich die physikalischen und technischen Eigenschaften von Halbzeugen aus thermoplastischen teilkristallinen Kunststoffen, wie z.B. Polypropylen, Polyethylen und Polyamid, stark verbessern, wenn diese in thermoelastischem Zustand unter definierten thermischen und mechanischen Bedingungen durch kontinuierliches Pressen umgeformt werden. Beim Preßrecken orientieren sich die Moleküle längs Geraden oder Ebenen, wenn diese monoaxial längs oder quer oder biaxial längs und quer preßgereckt werden; dadurch wird ein beachtlicher Verfestigungseffekt, d.h. eine Eigenverstärkung des Kunststoffs erzielt.

Eine besondere Ausführungsform des preßgereckten Lenkradskeletts besteht darin, daß nur die Problemzonen, d.h. der Lenkradkranz, vorzugsweise dessen oberer freier Abschnitt, die Übergangsbereiche Lenkradkranz/Lenkradspeichen, Lenkradspeichen/Lenkradnabe und/oder die Lenkradnabe ein monoaxiales Gefüge aufweisen.

Bei einem vorzugsweise ausgebildeten Lenkradskelett bestehen der Lenkradkranz und die Lenkradspeichen aus strang- oder stabförmigen Profilen mit monoaxialem Gefüge mit parallel zur Längsachse der Profile ausgerichteten Molekülen, wobei die Profile wenigstens in den Übergangsbereichen Lenkradkranz/Lenkradspeichen und Lenkradspeichen/Lenkradnabe mit einer aus dem gleichen Kunststoff wie die Profile selbst bestehenden Kunststoffschicht mit monoaxialem Gefüge, dessen Moleküle senkrecht zur Umfangsrichtung des Lenkradkranzes ausgerichtet sind, umhüllt sind.

Zur Herstellung des Lenkradskeletts wird ein Vorformling durch Spritzgießen erzeugt, auf eine unterhalb der Schmelztemperatur der Kristallite des Kunststoffs liegende Temperatur erwärmt und dann preßgereckt.

Ist nur eine partielle Eigenverstärkung des Lenkradskeletts vorgesehen, so wird in den für das Preßrecken vorgesehenen Bereichen des Vorformlings eine Materialanhäufung angebracht.

Ein weiteres Verfahrensmerkmal besteht darin, daß die Preßrecktemperatur 5 bis 45°C unterhalb der Schmelztemperatur der Kristallite des benutzten Kunststoffs liegt.

Zweckmäßigerweise beträgt der Preßreckgrad 0,5 bis 5, vorzugsweise 2,5 bis 3,5.

Das Spritzen, Erwärmen und Preßrecken des Vorformlings kann in ein und demselben Formwerkzeug mit entsprechend angebrachten Kavitäten durchgeführt werden.

Andererseits ist es möglich, das Spritzen des Vorformlings in einem ersten und das Erwärmen und Preßrecken in einem zweiten, mit einer entsprechenden Kavität versehenen Formwerkzeug vorzunehmen. Günstigerweise wird die Spritzwärme des Vorformlings aus der ersten Kavität ausgenutzt, indem dieser nach Verlassen des ersten Formwerkzeugs sofort im zweiten Formwerkzeug gepreßt wird.

Die Erfindung ist in den Zeichnungen beispielhaft dargestellt und wird nachstehend im einzelnen erläutert.

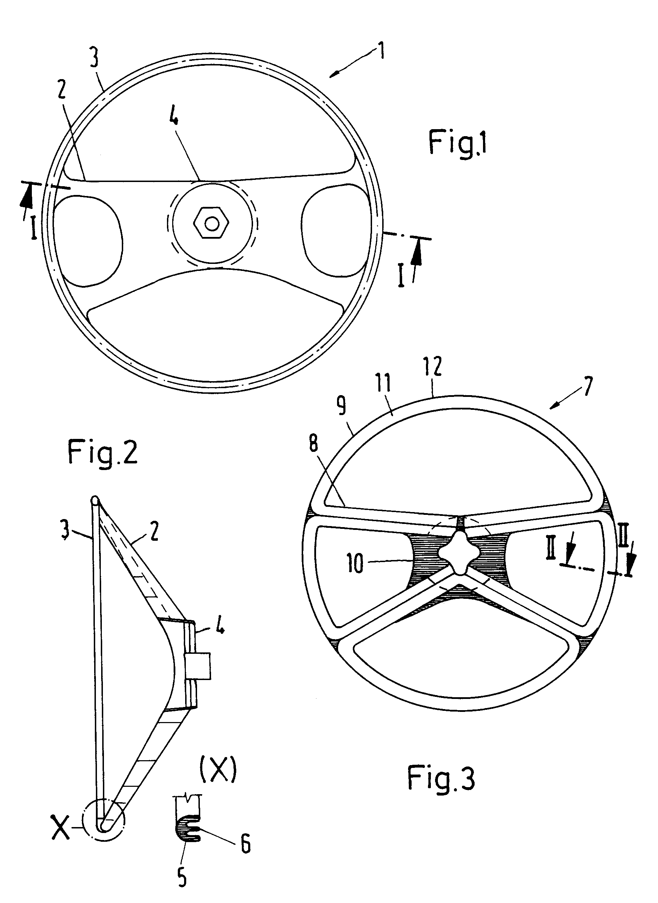

In Fig. 1 ist eine Draufsicht auf ein Lenkradskelett (1), von dem Fig. 2 einen Schnitt entlang der Linie I-I der Fig. 1 zeigt, wiedergegeben. Die über die Lenkradspeichen (2) mit dem Lenkradkranz (3) verbundene Lenkradnabe (4) ist gegenüber der Ebene des Lenkradkranzes (3) tieferliegend angeordnet. Der Vorformling des Lenkradskeletts (1) wird durch Spritzgießen von Polypropylen hergestellt, anschließend in einem Formwerkzeug mit einer freien Kavität im Bereich des Lenkradkranzes (3) auf T = 165 bis 168°C erwärmt und der rechteckige Lenkradkranz (3) des Vorformlings bei einem Druck von p = 300 kg/cm² und einer Preßzeit von t = 3 min in der Weise preßgereckt, daß sich die Moleküle des Propylens senkrecht zur Umfangsrichtung des Lenkradkranzes (3) orientieren. Wie aus Detail ("X") der Fig. 2 hervorgeht, besitzt der preßgereckte Lenkradkranz (3) ein rinnenförmiges Profil (5) mit einem entlang der Mittellinie verlaufenden Steg (6).

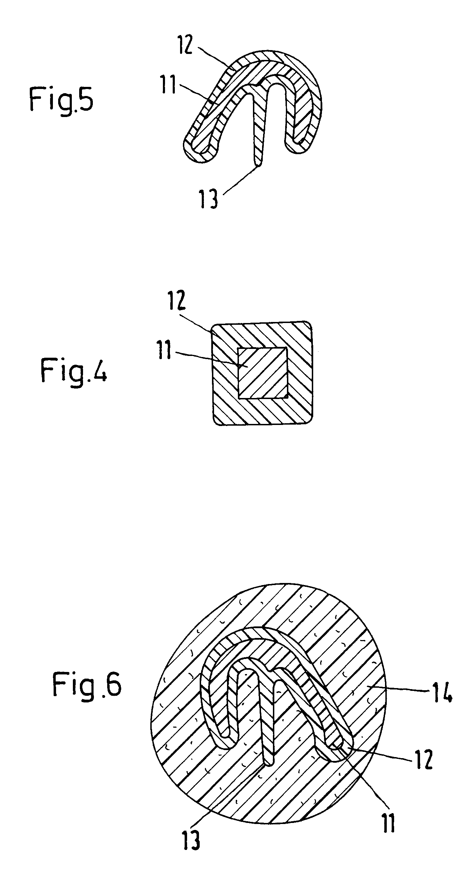

In Fig. 3 ist eine Draufsicht auf ein Lenkradskelett (7), dessen über die Lenkradspeichen (8) mit dem Lenkradkranz (9) verbundene Lenkradnabe (10) gegenüber der Ebene des Lenkradkranzes (9) tieferliegend angeordnet ist, dargestellt. Der Vorformling des Lenkradskeletts (7) wird in der Weise hergestellt, daß vier kreissektorförmig geformte, gemäß Fig. 4 einen quadratischen Querschnitt aufweisende walzpreßgereckte Stränge (11) aus Propylen, deren Moleküle monoaxial längs ausgerichtet sind, nebeneinander in ein entsprechend gestaltetes Formwerkzeug eingelegt und auf eine Temperatur von T = 140°C erwärmt werden. Die jeweils unmittelbar benachbarten beiden Seiten der kreissektorförmig geformten Stränge (11) bilden die Lenkradspeichen (8). Die kreissektorförmig geformten Stränge (11) werden dann allseitig mit einer Schicht (12) aus homogenem Polypropylen umspritzt und die freien Enden der Strangseiten in die gespritzte Lenkradnabe (10) eingebettet. Anschließend wird dieser Vorformling in einem Formwerkzeug mit einer freien Kavität im Bereich des Lenkradkranzes (9) und der Lenkradnabe (10) auf eine Temperatur von T = 110°C erwärmt und der Lenkradkranz (9) sowie die Lenkradnabe (10) bei einem Druck von p = 300 kg/cm² sowie einer Preßzeit von t = 2 min preßgereckt, so daß sich die Moleküle des Propylens im Lenkradkranz (9) monoaxial senkrecht zur Richtung der Moleküle der Stränge (11) orientieren. Die Moleküle der Lenkradnabe (10) verlaufen in Fließrichtung des Kunststoffs. In Fig. 5 ist ein Querschnitt durch den preßgereckten Lenkradkranz (9) entlang der Schnittlinie II-II der Fig. 3 wiedergegeben. Der Lenkradkranz (9) besitzt eine unsymmetrische rinnenförmige bzw. rippenförmige Gestalt mit einem entlang der Mittellinie verlaufenden Steg (13). Fig. 6 zeigt einen Querschnitt durch den Lenkradkranz (9) gemäß Fig. 5, der eine Ummantelung (14) aus Polyurethan-Integralschaum aufweist.

Die mit der Erfindung erzielten Vorteile bestehen insbesondere darin, daß das erfindungsgemäß gestaltete Lenkradskelett verglichen mit einem Metallskelett konventioneller Bauart zu einer Gewichtsersparnis von mehr als 30 % führt. Da das Lenkradskelett aus dem gleichen Kunststoff besteht, kann es problemlos recycliert werden. Aufgrund der geringen Affinität zwischen dem Lenkradskelett und dessen Ummantelung aus Polyurethan-Integralschaum ist ein Abtrennen und Loslösen der Ummantelung von dem Lenkradskelett einfach möglich, so daß auch der Polyurethanschaum recyclierfähig ist.

Mit Hilfe des Preßreckens ist es möglich, Lenkradskelette mit partiell unterschiedlichen physikalischen und technologischen Eigenschaften herzustellen. Dieser Vorteil kommt besonders auch der Herstellung von Lenkradskeletten für Airbag-Lenkräder entgegen, da es im Bereich des Lenkradkranzes auf hohe mechanische Eigenschaften ankommt, während der Bereich der Lenkradspeichen energieverzehrend wirken muß. Zusätzlich ist eine teilweise Kompensation des relativ hohen Gewichts des Airbag-Moduls möglich. Die eigenverstärkten Kunststoffstränge besitzen eine Gleichmaßdehnung und neigen daher nicht zum Sprödbruch.

Das erfindungsgemäß gestaltete Lenkradskelett erfüllt alle Funktionskriterien der passiven Sicherheit:
- Lenkradaufprall-Crashtest mit Dummy (US-Gesetz 571.208)
- Torsoaufschlag (US-Gesetz 571.203 sowie ECE 12)
- Kopfaufschlag (Kugelpendel, Masse reduziert 6,8 kg, Kugeldurchmesser 160 mm)
- Torsionsfestigkeit
- statische Biegeprüfung
- dynamische Biegeprüfung.

## Patentansprüche

1. Lenkrad, vorzugsweise für Lenkanlagen von Kraftfahrzeugen, mit einem aus thermoplastischem teilkristallinem Kunststoff, insbesondere Polypropylen, Polyethylen oder Polyamid, durch Spritzen hergestellten Lenkradskelett (1,7) ,das mit einer beim Aufschlag plastisch deformierbaren Kunststoffschicht (14), vorzugsweise aus Polyurethan-Integralschaum, ummantelt ist, dadurch gekennzeichnet, daß das Lenkradskelett (1,7) wenigstens in Teilbereichen des Lenkradkranzes (3,9) ein monoaxiales Gefüge besitzt, dessen Moleküle senkrecht zur Umfangsrichtung des Lenkradkranzes ausgerichtet sind.

2. Lenkrad nach Anspruch 1, dadurch gekennzeichnet, daß der obere freie Abschnitt des Lenkradkranzes (3,9), die Übergangsbereiche Lenkradkranz (3,9)/Lenkradspeichen (2,8), die Übergangsbereiche Lenkradspeichen (2,8)/Lenkradnabe (4,10) und/oder die Lenkradnabe (4,10) ein monoaxiales Gefüge besitzen.

3. Lenkrad nach den Ansprüchen 1 und/oder 2, dadurch gekennzeichnet, daß der Lenkradkranz (9) und die Lenkradspeichen (8) des Lenkradskeletts (7) aus strang- oder stabförmigen Profilen (11) bestehen, die ein monoaxiales Gefüge mit parallel zur Längsachse der Profile ausgerichteten Molekülen besitzen und die wenigstens in den Übergangsbereichen Lenkradkranz (9)/Lenkradspeichen (8) und Lenkradspeichen (8)/Lenkradnabe (10) mit einer aus dem gleichen Kunststoff wie die Profile (11) bestehenden Kunststoffschicht (12) mit monoaxialem Gefüge, dessen Moleküle senkrecht zur Umfangsrichtung des Lenkradkranzes ausgerichtet sind, umhüllt sind.

4. Verfahren zur Herstellung des Lenkrads nach den Ansprüchen 1 und 2, dadurch gekennzeichnet, daß ein aus thermoplastischem teilkristallinem Kunststoff durch Spritzgießen hergestellter Vorformling eines Lenkradskeletts auf eine unterhalb der Schmelztemperatur der Kristallite des benutzten Kunststoffs liegende Temperatur erwärmt und dann senkrecht zur Umfangsrichtung des Lenkradkranzes preßgereckt wird.

5. Verfahren nach Anspruch 4, dadurch gekennzeichnet, daß der Vorformling in den für das partielle Preßrecken vorgesehenen Bereichen mit einer Materialanhäufung versehen wird.

6. Verfahren nach den Ansprüchen 4 und/oder 5 zur Herstellung des Lenkrads nach den Ansprüchen 1 bis 3, dadurch gekennzeichnet, daß der Vorformling strang- bzw. stabförmigen Profile (11) enthält, die durch Walzpreßrecken hergestellt werden.

7. Verfahren nach den Ansprüchen 4 und 5, dadurch gekennzeichnet, daß die Preßrecktemperatur 5 bis 45°C unterhalb der Schmelztemperatur der Kristallite des verwendeten Kunststoffs liegt.

8. Verfahren nach den Ansprüchen 4 bis 7, dadurch gekennzeichnet, daß der Preßreckgrad 0,5 bis 5, vorzugsweise 2,5 bis 3,5, beträgt.

9. Verfahren nach den Ansprüchen 4 bis 8, dadurch gekennzeichnet, daß das Spritzen, Erwärmen und Preßrecken des Vorformlings in einem Formwerkzeug durchgeführt wird.

10. Verfahren nach den Ansprüchen 4 bis 8, dadurch gekennzeichnet, daß das Spritzen des Vorformlings in einer ersten und das Erwärmen und Preßrecken in einem zweiten Formwerkzeug durchgeführt wird, wobei ggf. die Spritzwärme des Vorformlings aus dem ersten Formwerkzeug so ausgenutzt wird, daß dieser sofort nach Verlassen des ersten Formwerkzeugs im zweiten Formwerkzeug preßgereckt wird.

## Claims

1. A steering-wheel, preferably for steering systems of motor vehicles, having a steering-wheel skeleton (1, 7) made of thermoplastic partially-crystalline plastics material, in particular polypropylene, polyethylene or polyamide, produced by injection-moulding, which skeleton is sheathed by a plastics layer (14), preferably of polyurethane integral foam, which is capable of plastic deformation upon impact, characterised in that the steering-wheel skeleton (1, 7), at least in partial regions of the steering-wheel rim (3, 9), has a monoaxial structure, the molecules of which are oriented at right-angles to the peripheral direction of the steering-wheel rim.

2. A steering-wheel according to Claim 1, characterised in that the upper free section of the steering-wheel rim (3, 9), the transition regions steering-wheel rim (3, 9)/steering-wheel spokes (2, 8), the transition regions steering-wheel spokes (2, 8)/steering-wheel hub (4, 10) and/or the steering-wheel hub (4, 10) have a monoaxial structure.

3. A steering-wheel according to Claims 1 and/or 2, characterised in that the steering-wheel rim (9) and the steering-wheel spokes (8) of the steering-wheel skeleton (7) consist of extruded or bar-shaped profiles (11) which have a monoaxial structure with molecules oriented parallel to the longitudinal axis of the profiles, and which are sheathed by a plastics layer (12) made of the same plastics material as the profiles (11), having a monoaxial structure, the molecules of which are oriented at right-angles to the peripheral direction of the steering-wheel rim, at least in the transition regions steering-wheel rim (9)/steering-wheel spokes (8) and steering-wheel spokes (8)/steering-wheel hub (10).

4. A method for producing the steering-wheel according to Claims 1 and 2, characterised in that a preform of a steering-wheel skeleton produced from thermoplastic partially-crystalline plastics material by injection-moulding is heated to a temperature below the melting temperature of the crystallites of the plastics material used and then is press-stretched at right-angles to the peripheral direction of the steering-wheel rim.

5. A method according to Claim 4, characterised in that the preform is provided with an accumulation of material in the regions intended for the partial press-stretching operation.

6. A method according to Claims 4 and/or 5 for the production of the steering-wheel according to Claims 1 to 3, characterised in that the preform contains extruded or bar-shaped profiles (11) which have been produced by rolling press-stretching.

7. A method according to Claims 4 and 5, characterised in that the press-stretching temperature is 5 to 45°C below the melting temperature of the crystallites of the plastics material used.

8. A method according to Claims 4 to 7, characterised in that the degree of press-stretching is 0.5 to 5, preferably 2.5 to 3.5.

9. A method according to Claims 4 to 8, characterised in that the injection-moulding, heating and press-stretching of the preform is effected in a mould.

10. A method according to one of Claims 4 to 8, characterised in that the injection-moulding of the preform is effected in a first mould, and the heating and press-stretching in a second mould, with the injection-moulding heat of the preform from the first mould optionally being utilised such that it is press-stretched in the second mould immediately after leaving the first mould.

## Revendications

1. Volant de direction, notamment pour des dispositifs de direction de véhicules automobiles, comportant une ossature de volant (1,7) fabriquée par injection en une matière thermoplastique partiellement cristalline, notamment du polypropylène, du polyéthylène ou du polyamide, et qui est enveloppé par une couche de matière plastique (14) déformable plastiquement lors d'un choc, de préférence formée d'une mousse intégrale de polyuréthane, caractérisé par le fait que l'ossature (1,7) du volant possède, au moins dans des parties de la couronne (3,9) du volant, une structure uniaxiale, dont les molécules sont orientées perpendiculairement dans la direction circonférentielle de la couronne du volant.

2. Volant selon la revendication 1, caractérisé en ce que la partie supérieure libre de la couronne (3,9) du volant, des zones de jonction couronne (3,9) du volant / rayons (2,8) du volant, les zones de jonction rayons (2,8) du volant / moyeu (4,10) du volant et/ou le moyeu (4,10) du volant possèdent une structure uniaxiale.

3. Volant selon la revendication 1 et/ou 2, caractérisé par le fait que la couronne (9) et les rayons (8) de l'ossature (7) du volant sont constitués par des profilés (11) en forme de barres ou de tiges, qui possèdent une structure uniaxiale, dans laquelle les molécules sont orientées parallèlement à l'axe longitudinal du profilé, et qui sont enveloppées, au moins dans les zones de jonction couronne (9) du volant / rayons (8) du volant et rayons (8) du volant / moyeu (10) du volant, par une couche de matière plastique (12) formée de la matière plastique que les profilés (11) et possédant une structure uniaxiale, dont les molécules sont orientées perpendiculairement à la direction circonférentielle de la couronne du volant.

4. Procédé pour fabriquer le volant suivant les revendications 1 et 2, caractérisé par le fait qu'on chauffe une préforme de l'ossature du volant, fabriquée par moulage par injection en une matière thermoplastique partiellement cristalline, à une température inférieure à la température de fusion des cristallites de la matière plastique utilisée et qu'ensuite on l'étire à la presse perpendiculairement à la direction circonféren-tielle de la couronne du volant.

5. Procédé suivant la revendication 4, caractérisé par le fait qu'on dispose une accumulation de matière dans la préforme, dans les zones prévues pour l'étirage partiel à la presse.

6. Procédé suivant l'une des revendications 4 et/ou 5 pour la fabrication du volant suivant les revendications 1 à 3, caractérisé par le fait que la préforme contient des profilés en forme de barres ou de tiges, que l'on fabrique par étirage à la presse avec laminage.

7. Procédé suivant l'une des revendications 4 et 5, caractérisé par le fait que la température d'étirage de la presse se situe de 5 à 45°C au-dessous de la température de fusion des cristallites de la matière plastique utilisée.

8. Procédé suivant les revendications 4 à 7, caractérisé par le fait que le degré d'étirage à la presse est compris entre 0,5 et 5 et de préférence entre 2,5 et 3,5.

9. Procédé suivant les revendications 4 à 8, caractérisé par le fait qu'on exécute le moulage par injection, le chauffage et l'étirage à la presse de la préforme dans un outil de moulage.

10. Procédé suivant les revendications 4 à 8, caractérisé par le fait que l'injection par moulage de la préforme est exécutée dans un premier outil de moulage et que le chauffage et l'étirage de la presse sont exécutés dans un second outil de moulage, auquel cas éventuellement la chaleur de moulage par injection de la préforme, dégagée par le premier outil de moulage est utilisée pour un étirage à la presse de la préforme dans un second outil de moulage, dès qu'elle a quitté le premier outil de moulage.
